# EUROPÄISCHE PATENTSCHRIFT

(11) **EP 3 172 063 B1**
(45) Veröffentlichungstag und Bekanntmachung des Hinweises auf die Patenterteilung: **16.05.2018**
(21) Anmeldenummer: 15723976.5
(22) Anmeldetag: 26.05.2015
(51) Int. Cl.: B60C 11/03, B60C 11/13

(54) **LAUFFLÄCHENPROFIL EINES FAHRZEUGREIFENS**
VEHICLE TIRE TREAD
BANDE DE ROULEMENT DE PNEU DE VEHICULE

(30) Priorität: 24.07.2014 DE 102014214546
(43) Veröffentlichungstag der Anmeldung: 31.05.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/061520
(87) Internationale Veröffentlichungsnummer: WO 2016/012128

(56) Entgegenhaltungen:
- EP-A1- 2 119 574
- DE-A1-102005 025 236
- JP-A- 2009 214 759
- US-A1- 2003 047 262

## Beschreibung

Die Erfindung betrifft ein asymmetrisches Laufflächenprofil eines Fahrzeugreifens - insbesondere eines PKW-Fahrzeugluftreifens - mit wenigstens zwei in Umfangsrichtung über den Umfang des Fahrzeugreifens umlaufenden Hauptentwässerungsrillen, welche Profilelemente in Umfangrichtung voneinander abgrenzen, wobei - im Reifenquerschnitt betrachtet - jede Hauptentwässerungsrille durch zwei einander gegenüberliegende Rillenflanken nach axial außen und durch einen von beiden Rillenflanken eingeschlossenen Rillengrund nach radial innen begrenzt ist, wobei die in einem am Fahrzeug montierten Zustand des Fahrzeugreifens nach fahrzeugaußen weisenden äußeren Rillenflanken einen Winkel α_{1,2,3} mit der im Schnitt von Rillenflanke mit Laufflächenprofiloberfläche verlaufenden radialen Richtung einnehmen und wobei die in einem am Fahrzeug montierten Zustand des Fahrzeugreifens nach fahrzeuginnen weisenden inneren Rillenflanken einen Winkel β_{1,2,3} mit der im Schnitt von Rillenflanke mit Laufflächenprofiloberfläche verlaufenden radialen Richtung einnimmt, wobei die Winkel α_{1,2, 3} größer als die Winkel β_{1,2,3} sind. Die Erfindung betrifft ebenfalls einen Fahrzeugluftreifen, welcher ein entsprechendes asymmetrisches Laufflächenprofil aufweist.

DE 10 2005 025236 A1 betrifft "einen Nutzfahrzeugreifen-insbesondere Nutzfahrzeugluftreifen - mit einem zwischen einer ersten Reifenschulter und einer zweiten Reifenschulter axial erstreckten asymmetrischen gattungsgemäßen Laufflächenprofil mit mehrerern jeweils in Umfangrichtung des Fahrzeugreifens ausgerichteten über den Umfang des Fahrzeugreifens erstreckten und in axialer Richtung des Fahrzeugreifens nebeneinander angeordneten und jeweils durch eine in Umfangsrichtung des Fahrzeugreifens erstreckte Umfangsrille axial von einander getrennten Profilrippen" (s. Beschreibungsseite 1, erster Absatz).

Ein derartiges Laufflächenprofil ist aus der DE-A-102008023977 bekannt. Fahrzeugluftreifen mit einem derartigen Laufflächenprofil unterliegen besonders bei sportlicher Anwendung dem Zielkonflikt aus guten Handlingeigenschaften, hier insbesondere Trockenhandling einerseits und guten Aquaplaningeigenschaften andererseits. Zur Erzielung guter Trockenhandlingeigenschaften ist eine hohe Quersteifigkeit der Profilblockelemente bzw. der Profilrippen wünschenswert. Hierzu ist es wünschenswert die Neigungswinkel der Rillenwände von Umfangsrillen möglichst groß auszubilden. Zur Erzielung guter Aquaplaningeigenschaften ist es wünschenswert, den offenen Querschnitt einer Hauptentwässerungsrille möglichst groß auszubilden. Hierzu ist es wünschenswert die Neigungswinkel der Rillenflanken zur Radialen möglichst klein auszubilden. Aufgrund dieser sich widersprechenden Anforderungen wird häufig ein Kompromiss mit Neigungswinkeln gewählt, die reduzierte Handlingeigenschaften mit reduzierten Aquaplaningeigenschaften verbindet. Je nach Anforderungen werden die beiden Neigungswinkel zugunsten verbesserter Handlingeigenschaften unter in Kaufnahme reduzierter Aquaplaningeigenschaften größer oder aber zugunsten verbesserter Aquaplaningeigenschaften unter in Kaufnahme reduzierter Handlingeigenschaften kleiner gewählt. Die Neigungswinkel sind wie üblich mit einer jeweils von der axialen Mitte der Hauptenwässerungsrille axial wegweisenden Neigung ausgeführt.

"Asymmetrisches Laufflächenprofile" werden insbesondere für Reifen mit sportlicher Anwendung eingesetzt. Asymmetrische Laufflächenprofile weisen in Bezug auf den Laufflächenzenit zwei Bereiche auf, von denen der Bereich der Laufflächenaußenseite ein geringeres Negativvolumen als der Bereich der Laufflächeninnenseite aufweist. Bei starken Handlingmanövern während des sportlichen Fahrens stützt der Bereich der Laufflächenaußenseite mit dem geringen Negativvolumen und dem hohen Positivvolumen den Reifen ab.

Dabei wird diejenige Laufflächenprofilseite/ der Laufflächenbereich, welche(r) im das Laufflächenprofil aufweisende und am Fahrzeug montierten Fahrzeugreifen nach fahrzeugaußen weist, als "Außenseite" des Laufflächenprofils und die nach fahrzeuginnen weisende Laufflächenprofilseite als "Innenseite" des Laufflächenprofils bezeichnet. Es ist zweifelsfrei, dass das zur Erläuterung von Innenseite und Außenseite des Laufflächenprofils erwähnte Fahrzeug nicht mit vom Schutzumfang umfasst ist.

Der Erfindung liegt die Aufgabe zugrunde, ein Laufstreifenprofil bereitzustellen, das den Zielkonflikt Trockenhandlingeigenschaften zu Aquaplaningeigenschaften mit einfachen Mitteln auf einem höheren Niveau löst.

Die Aufgabe wird erfindungsgemäß dadurch gelöst, dass sich die Winkel α_{1,2,3} der äußeren Rillenflanken von der äußersten Hauptentwässerungsrille, welche an der Außenseite des Laufflächenprofils angeordnet ist, zur innersten Hauptentwässerungsrille, welche an der Innenseite des Laufflächenprofils angeordnet ist, verkleinern und dass die Winkel β_{1,2, 3} der inneren Rillenflanken aller Hauptentwässerungsrillen in etwa gleich groß sind und zwischen 0° und 5° betragen.

Die Winkel der äußeren Rillenflanken verringern sich erfindungsgemäß über die axiale Breite des Laufstreifenprofils von der Außenseite zur Innenseite, während die Winkel der inneren Rillenflanken bei allen Hauptentwässerungsrillen in etwa gleich groß sind. Je weiter die Hauptenwässerungsrille zur Außenseite des Laufflächenprofils hin angeordnet ist, desto größer wird die Asymmetrie des inneren Flankenwinkels in Bezug auf den äußeren Flankenwinkel.

Die äußeren Rillenflanken, welche zur Laufprofilaußenseite weisen, stützen die von lateral außen wirkenden Kräfte ab. Diese Abstützung wirkt sich vorteilhaft auf die Trockenhandlingeigenschaften des Reifens aus. Es hat sich jedoch gezeigt, dass der Kraftfluß von der Außenseite des Laufstreifenprofils zur Innenseite des Laufstreifenprofils hin stark abnimmt. Somit benötigen die Profilelemente der Reifenaußenseite eine stärkere Abstützung als die Profilelemente in der Reifenmitte. Die Profilelemente der Reifenmitte benötigen wiederum eine stärkere Abstützung als die Profilelemente der Reifeninnenseite. Daher ist trotz der von der Reifenaußenseite zur Reifeninnenseite hin steiler werdenden äußeren Flankenwinkeln ein gutes Handlingverhalten des diesen Laufstreifen aufweisenden Fahrzeugreifens erhalten.

Das Aquaplaningverhalten ist verbessert, da durch die von der Reifenaußenseite zur Reifeninnenseite hin steiler ausgebildeten äußeren Flanken ein größeres Negativvolumen der Hauptenwässerungsrillen erhalten ist, wodurch die Ableitung des Wassers verbessert und das Aquaplaningverhalten des diesen Laufstreifen aufweisenden Reifens positiv beeinflusst.

"Hauptentwässerungsrille" meint eine über den Umfang des Laufflächenprofils umlaufende Umfangsrille, welche in Bezug auf sämtliche Profilelemente des Laufflächenprofils maximaltief ist und eine Profiltiefe von 6,0 - 8,5 mm aufweist. Zudem weist die Hauptentwässerungsrille eine Rillenbreite von mindestens 7 mm auf, gemessen senkrecht auf die Längserstreckung der Hauptentwässerungsrille und an der Laufflächenprofiloberseite.

Vorteilhaft ist es, wenn das Laufstreifenprofil drei Hauptenwässerungsrillen aufweist, wobei die Winkel α₁ und β₁ der äußersten Umfangsrille, die Winkel α₂ und β₂ der mittleren im Laufstreifen angeordneten Umfangsrille und die Winkel α₃ und β₃ der innersten Umfangsrille zugeordnet sind, wobei α₁ zwischen 15° und 25°, vorzugsweise etwa 20° und α₂ zwischen 8° und 12°, vorzugsweise etwa 10° und wobei a3 zwischen 3° und 7°, vorzugsweise etwa 5° beträgt und wobei β_{1,2, 3} etwa 3° betragen. Durch diese vorgenannten Fankenwinkel ist ein optimaler Kompromiss zwischen guten Handlingeigenschaften und guten Aquaplaningeigenschaften erhalten. Es ist ein optimales Verhältnis von Negativvolumen zu großer Laufprofiloberfläche erhalten.

In einer anderen Ausführung der Erfindung weist das asymmetrisches Laufflächenprofil vier Hauptentwässerungsrillen auf, wobei die Winkel α₁₋₄ und β₁₋₄ von der äußeren Hauptentwässerungsrille mit dem Winkel α₁ und β₁ beginnend zur inneren Hauptentwässerungsrille mit dem Winkel α₄ und β₄ endend nummeriert sind, wobei α₁ zwischen 25° und 18°, vorzugsweise etwa 20° und α₂ zwischen 17° und 13°, vorzugsweise etwa 15°, wobei α₃ zwischen 12° und 8°, vorzugsweise etwa 10°, wobei α₄ zwischen 3° und 7°, vorzugsweise etwa 5° beträgt und wobei β_{1,2,3,4} zwischen 1° und 5°, vorzugsweise etwa 3° betragen.

In einer weiteren Ausführung der Erfindung weist das asymmetrische Laufflächenprofil fünf Hauptentwässerungsrillen auf, wobei die Winkel α₁₋₅ und β₁₋₅ von der äußeren Hauptentwässerungsrille mit dem Winkel α₁ und β₁ beginnend zur inneren Hauptentwässerungsrille mit dem Winkel α₅ und β₅ endend nummeriert sind, wobei α₁ zwischen 30° und 23°, vorzugsweise etwa 25° und α₂ zwischen 22° und 18°, vorzugsweise etwa 20°, wobei α₃ zwischen 17° und 13°, vorzugsweise etwa 15°, wobei α₄ zwischen 8° und 12°, vorzugsweise etwa 10°, wobei α₅ zwischen 3° und 7°, vorzugsweise etwa 5° beträgt und wobei β_{1,2,3,4,5} zwischen 1° und 5°, vorzugsweise etwa 3° betragen.

In einer bestimmten Ausführung der Erfindung sind die Hauptentwässerungsrillen symmetrisch in Bezug auf den Zenit des Laufflächenprofils angeordnet. Insbesondere bei einer Laufflächenprofilausbildung mit vier Hauptentwässerungsrillen ist die Entwässerung verbessert, während das Trockenhandling nicht gleich stark wie die Entwässerung verbessert ist.

In einer anderen Ausführung der Erfindung sind die Umfangsrillen asymmetrisch in Bezug auf den Zenit des Laufflächenprofils angeordnet. Insbesondere bei einem Laufflächenprofil mit drei Hauptentwässerungsrillen sind zwei dieser Hauptentwässerungsrillen in Bezug auf den Laufflächenprofilzenit auf der Innenseite und eine Hauptentwässerungsrille auf der Außenseite des Laufstreifenprofils angeordnet. Es steht ein größeres Negativvolumen auf der Innenseite zur Verfügung, wodurch die Entwässerung stark verbessert ist, während mehr Positivvolumen auf der Außenseite zur Verfügung steht, wodurch das Trockenhandling stark verbessert ist.

Die Erfindung betrifft ebenfalls einen Fahrzeugluftreifen, welcher ein asymmetrisches vorbeschriebenes Laufstreifenprofil aufweist. Der Fahrzeugluftreifen ist vorzugsweise ein PKW-Reifen, der für hohe Geschwindigkeiten mit dem Geschwindigkeitssymbol W und höher gekennzeichnet ist.

Die Maßangaben beziehen sich auf einen Laufstreifen eines Fahrzeugreifens, welcher auf eine Normfelge aufgezogen ist und welcher einen Norm-Betriebsdruck aufweist (gemäß ETRTO).

Die Erfindung wird im Folgenden an Hand von Figuren, welche schematische Ausführungsbeispiele der Erfindung darstellen, näher erläutert. Dabei zeigen die
- Fig. 1: einen schematischen Querschnitt durch ein erfindungsgemäßes Laufflächenprofil mit drei Hauptentwässerungsrillen wobei die drei Umfangsrillen zusätzlich als vergrößerte Querschnitte dargestellt sind;
- Fig. 2: einen schematischen Querschnitt durch ein anderes erfindungsgemäßes Laufflächenprofil mit vier Hauptenwässerungsrillen.

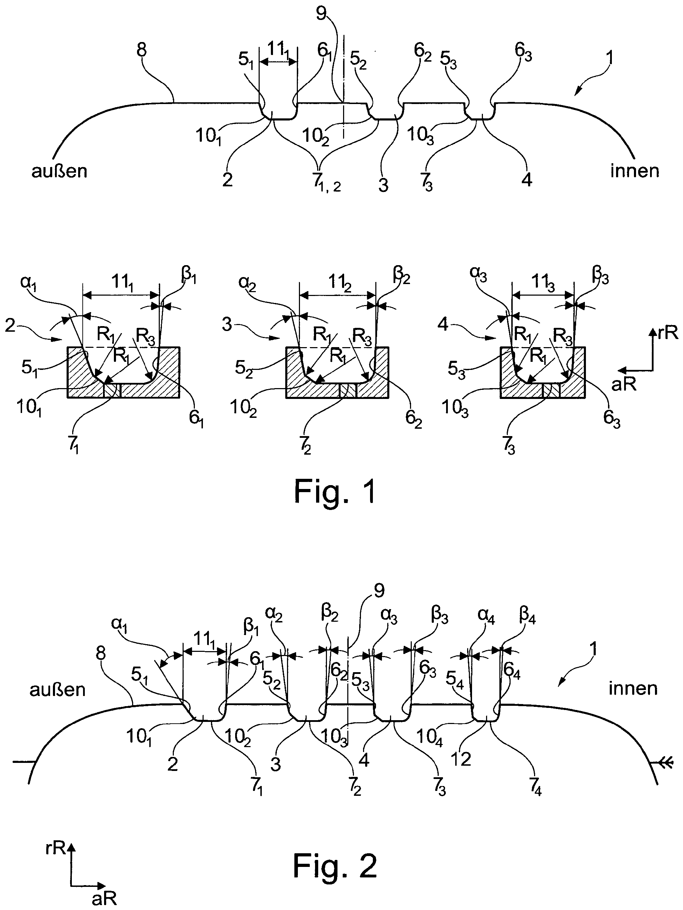

Die Fig. 1 zeigt einen schematischen Querschnitt durch ein erfindungsgemäßes Laufflächenprofil 1 mit drei Umfangsrillen 2, 3, 4, wobei die drei Umfangsrillen 2, 3, 4 zusätzlich als vergrößerte Querschnitte dargestellt sind.

Das asymmetrische Laufflächenprofil 1 ist ein für sportliche Anwendungen geeigneter PKW-Reifen radialer Bauart mindestens mit dem Geschwindigkeitssymbol V, vorzugsweise mit dem Geschwindigkeitssymbol W oder höher.

Das Laufflächenprofil 1 ist vereinfacht als dessen Außenkontur dargestellt, in welchem nur die Hauptentwässerungsrillen 2, 3, 4 und keine Profilelemente gezeigt sind.

Die axiale Richtung aR und die radiale Richtung rR sind mit Pfeilen gekennzeichnet. Das asymmetrische Laufflächenprofil 1 weist drei in Umfangsrichtung über den Umfang des Laufflächenprofils 1 umlaufende Hauptentwässerungsrillen 2, 3, 4 auf. Die Hauptentwässerungsrillen 2, 3, 4 grenzen Profilelemente in Umfangrichtung voneinander ab. Jede der drei Hauptentwässerungsrillen 2, 3, 4 ist durch zwei einander gegenüberliegende Rillenflanken 5_{1,2,3}, 6_{1,2,3} nach axial außen und durch einen von beiden Rillenflanken 5_{1,2,3}, 6₁,₂,₃ eingeschlossenen Rillengrund 7_{1,2,3} nach radial innen begrenzt. Die in einem am Fahrzeug montierten Zustand des Fahrzeugreifens zum Fahrzeugäußeren weisende äußere Rillenflanke 5_{1,2,3} nimmt einen Winkel α_{1,2, 3} mit der im Schnitt von Rillenflanke 5₁,₂,₃ mit Laufflächenprofiloberfläche 8 verlaufenden radialen Richtung rR ein. Die in einem am Fahrzeug montierten Zustand des Fahrzeugreifens zum Fahrzeuginneren weisende innere Rillenflanke 6_{1,2,3} nimmt einen Winkel β_{1,2, 3} mit der im Schnitt von Rillenflanke 6_{1,2,3} mit Laufflächenprofiloberfläche verlaufenden radialen Richtung rR ein. Die Winkel α_{1,2, 3} sind größer als die Winkel β_{1,2,3}. Die Winkel α_{1,2, 3} der äußeren Rillenflanken 5_{1,2,3} verkleinern sich von der äußersten Hauptentwässerungsrille 2, welche an der zum Fahrzeugäußeren weisenden Laufflächenprofilseite (außen) angeordnet ist, zur innersten Hauptentwässerungsrille 4, welche an der zum Fahrzeuginneren weisenden Laufflächenprofilseite (innen) angeordnet ist. Die Winkel β_{1,2, 3} der inneren Rillenflanken aller Umfangsrillen sind hingegen in etwa gleich groß und betragen etwa 3°. Die Breite der Hauptentwässerungsrillen 11_{1,2,3} beträgt immer mindestens 7 mm und nimmt von der innersten Hauptentwässerungsrille 4 zur äußersten Hauptentwässerungsrille 2 zu.

Die Winkel α₁ und β₁ sind der äußersten Hauptentwässerungsrille 2, die Winkel α₂ und β₂ sind der mittleren im Laufstreifen angeordneten Hauptentwässerungsrille 3 und die Winkel α₃ und β₃ sind der innersten Hauptentwässerungsrille 4 zugeordnet, wobei α₁ etwa 20°, α₂ etwa 10° und wobei α3 etwa 5° beträgt. Die Winkel β_{1, 2, 3} betragen etwa 3°. Die Hauptentwässerungsrillen 2, 3, 4 sind asymmetrisch in Bezug auf den Zenit 9 angeordnet, zwei Hauptentwässerungsrillen 3, 4 befinden sich innen vom Zenit 9, eine Hauptentwässerungsrille 2 befindet sich außen vom Zenit 9. Durch die Verwendung des Begriffes "etwa" sollen mögliche und übliche Fertigungstoleranzen mit eingeschlossen sein.

Von der äußeren Rillenflanke 5₁,₂,₃ ausgehend Richtung Rillengrund 7_{1,2,3} ist eine weitere, wesentlich flachere weitere Flanke 10 unter einem Winkel von etwa 45° in Bezug auf die Laufflächenprofiloberfläche 8 angeordnet, welche an ihren beiden Enden je einen Radius R1 aufweist, welcher einerseits die Verbindung zur äußeren Rillenflanke 5₁,₂,₃ und andererseits die Verbindung zum Rillengrund 7 herstellt. Der Rillengrund 7_{1,2,3} wird durch eine axial ausgerichtete Gerade gebildet. Ein weiterer Radius R3 verbindet den Rillengrund 7 mit der inneren Rillenflanke 6_{1,2,3}.

Die Fig. 2 zeigt einen schematischen Querschnitt durch ein anderes erfindungsgemäßes Laufflächenprofil 1 mit vier Hauptentwässerungsrillen 2, 3, 4, 12.

Das asymmetrische Laufflächenprofil 1 ist ein für sportliche Anwendungen geeigneter PKW-Reifen radialer Bauart mit dem Geschwindigkeitssymbol V, vorzugsweise mit dem Geschwindigkeitssymbol W oder höher.

Das Laufflächenprofil 1 ist vereinfacht als dessen Außenkontur dargestellt, in welchem nur die Hauptentwässerungsrillen 2, 3, 4, 12 und keine Profilelemente gezeigt sind.

Die axiale Richtung aR und die radiale Richtung rR sind mit Pfeilen gekennzeichnet. Das asymmetrisches Laufflächenprofil 1 weist vier in Umfangsrichtung über den Umfang des Laufflächenprofils 1 umlaufende Hauptentwässerungsrillen 2, 3, 4, 12 auf. Die Hauptentwässerungsrillen 2, 3, 4, 12 grenzen Profilelemente in Umfangrichtung voneinander ab. Jede der vier Hauptentwässerungsrillen 2, 3, 4, 12 ist durch zwei einander gegenüberliegende Rillenflanken 5_{1,2,3,4}, 6_{1,2,3,4} nach axial außen und durch einen von beiden Rillenflanken 5_{1,2,3,4}, 6₁,₂,₃,₄ eingeschlossenen Rillengrund 7_{1,2},₃,₄ nach radial innen begrenzt. Die in einem am Fahrzeug montierten Zustand des Fahrzeugreifens zum Fahrzeugäußeren weisende äußere Rillenflanke 5_{1,2,3,4} nimmt einen Winkel α_{1,2},₃,₄ mit der im Schnitt von Rillenflanke 5₁,₂,₃,₄ mit Laufflächenprofiloberfläche 8 verlaufenden radialen Richtung rR ein. Die in einem am Fahrzeug montierten Zustand des Fahrzeugreifens zum Fahrzeuginneren weisende innere Rillenflanke 6₁,₂,₃,₄ nimmt einen Winkel β_{1,2},₃,₄ mit der im Schnitt von Rillenflanke 6₁,₂,₃,₄ mit Laufflächenprofiloberfläche 8 verlaufenden radialen Richtung rR ein. Die Winkel α_{1,2,3,4} sind größer als die Winkel β_{1,2,3,4}. Die Winkel α_{1,2,3,4} der äußeren Rillenflanken 5₁,₂,₃,₄ verkleinern sich von der äußersten Hauptentwässerungsrille 2, welche an der zum Fahrzeugäußeren weisenden Laufflächenprofilseite (außen) angeordnet ist, zur innersten Hauptentwässerungsrille 12, welche an der zum Fahrzeuginneren weisenden Laufflächenprofilseite (innen) angeordnet ist. Die Winkel β_{1,2,3,4} der inneren Rillenflanken aller Umfangsrillen sind hingegen in etwa gleich groß und betragen etwa 3°. Die Breite der Hauptentwässerungsrillen 11_{1,2,3,4} beträgt immer mindestens 7 mm und nimmt von der innersten Hauptentwässerungsrille 12 zur äußersten Hauptentwässerungsrille 2 zu.

Die Winkel α₁ und β₁ sind der äußersten Hauptentwässerungsrille 2, die Winkel α₂ und β₂ sind der der äußersten Hauptenwässerungsrille 2 unmittelbar benachbarten mittleren im Laufstreifen angeordneten Hauptentwässerungsrille 3, die Winkel α₃ und β₃ sind der weiteren mittleren Hauptenwässerungsrille 4 und die Winkel α₄ und β₄ sind der innersten Hauptentwässerungsrille 12 zugeordnet, wobei α₁ etwa 20°, α₂ etwa 15°, wobei α₃ etwa 10° und wobei α₄ etwa 5° beträgt. Die Winkel β_{1,2,3,4} betragen etwa 3°. Die Hauptentwässerungsrillen 2, 3, 4, 12 sind symmetrisch in Bezug auf den Zenit 9 angeordnet, zwei Hauptentwässerungsrillen 4, 12 befinden sich innen vom Zenit 9, zwei Hauptentwässerungsrillen 2, 3 befindet sich außen vom Zenit 9. Durch die Verwendung des Begriffes "etwa" sollen mögliche und übliche Fertigungstoleranzen mit eingeschlossen sein.

### Bezugszeichenliste

### (Teil der Beschreibung)

- 1: Laufflächenprofil
- 2: Hauptenwässerungsrille
- 3: Hauptenwässerungsrille
- 4: Hauptenwässerungsrille
- 5: Äußere Rillenflanke
- 6: Innere Rillenflanke
- 7: Rillengrund
- 8: Laufflächenprofiloberfläche
- 9: Zenit des Laufflächenprofils
- 10: Weitere Flanke
- 11: Breite der Hauptenwässerungsrille
- 12: Hauptenwässerungsrille

- rR: radiale Richtung
- aR: axiale Richtung

## Patentansprüche

1. Asymmetrisches Laufflächenprofil (1) eines Fahrzeugreifens - insbesondere eines PKW-Fahrzeugluftreifens - mit wenigstens zwei in Umfangsrichtung über den Umfang des Fahrzeugreifens umlaufenden Hauptentwässerungsrillen (2, 3, 4), welche Profilelemente in Umfangrichtung voneinander abgrenzen, wobei - im Reifenquerschnitt betrachtet - jede Hauptentwässerungsrille (2, 3, 4) durch zwei einander gegenüberliegende Rillenflanken (5_{1,2,3,} 6_{1,2,3}) nach axial außen und durch einen von beiden Rillenflanken (5_{1,2,3}, 6_{1,2,3}) eingeschlossenen Rillengrund (7) nach radial innen begrenzt ist, wobei die in einem am Fahrzeug montierten Zustand des Fahrzeugreifens nach fahrzeugaußen weisenden äußeren Rillenflanken (5_{1,2,3}) einen Winkel α_{1,2,3} mit der im Schnitt von Rillenflanke (5_{1,2,3}) mit
Laufflächenprofiloberfläche (8) verlaufenden radialen Richtung (rR) einnehmen und wobei die in einem am Fahrzeug montierten Zustand des Fahrzeugreifens nach fahrzeuginnen weisenden inneren Rillenflanken (6_{1,2,3}) einen Winkel β_{1,2, 3} mit der im Schnitt von Rillenflanke (6_{1,2,3}) mit Laufflächenprofiloberfläche (8) verlaufenden radialen Richtung (rR) einnehmen, wobei die Winkel α_{1,2,3} größer als die Winkel β_{1,2, 3} sind, wobei die Winkel β_{1,2,3} der inneren Rillenflanken (6_{1,2,3}) aller Hauptentwässerungsrillen (2, 3, 4) in etwa gleich groß sind und zwischen 0° und 5° betragen,
**dadurch gekennzeichnet, dass**
sich die Winkel α_{1,2, 3} der äußeren Rillenflanken (5_{1,2,3}) von der äußersten (2) Hauptentwässerungsrille, welche an der Außenseite des Laufflächenprofils (1) angeordnet ist, zur innersten Hauptentwässerungsrille (4), welche an der Innenseite des Laufflächenprofils (1) angeordnet ist, verkleinern.

2. Asymmetrisches Laufflächenprofil nach Anspruch 1, **dadurch gekennzeichnet, dass** dieses drei Hauptentwässerungsrillen 2, 3, 4 aufweist, wobei die Winkel α₁ und β₁ der äußersten Hauptentwässerungsrille 2, die Winkel α₂ und β₂ der mittleren im Laufstreifen angeordneten Hauptentwässerungsrille 3 und die Winkel α₃ und β₃ der innersten Hauptentwässerungsrille 4 zugeordnet sind, wobei α₁ zwischen 15° und 25°, vorzugsweise etwa 20° und α₂ zwischen 8° und 12°, vorzugsweise etwa 10° und wobei α₃ zwischen 3° und 7°, vorzugsweise etwa 5° beträgt und wobei β_{1,2, 3} zwischen 1° und 5°, vorzugsweise etwa 3° betragen.

3. Asymmetrisches Laufflächenprofil nach Anspruch 1, **dadurch gekennzeichnet, dass** dieses vier Hauptentwässerungsrillen 2, 3, 4, 12 aufweist, wobei die Winkel α₁₋₄ und β₁₋₄ von der äußersten Hauptenwässerungsrille 2 mit dem Winkel α₁ und β₁ beginnend zur inneren Hauptentwässerungsrille 12 mit dem Winkel α₄ und β₄ endend nummeriert sind, wobei α₁ zwischen 25° und 18°, vorzugsweise etwa 20° und α₂ zwischen 17° und 13°, vorzugsweise etwa 15°, wobei α₃ zwischen 12° und 8°, vorzugsweise etwa 10°, wobei α₄ zwischen 3° und 7°, vorzugsweise etwa 5° beträgt und wobei β_{1,2,3,4} zwischen 1° und 5°, vorzugsweise etwa 3° betragen.

4. Asymmetrisches Laufflächenprofil nach Anspruch 1, **dadurch gekennzeichnet, dass** dieses fünf Hauptentwässerungsrillen aufweist, wobei die Winkel α₁₋₅ und β₁₋₅ von der äußeren Hauptenwässerungsrille mit dem Winkel α₁ und β₁ beginnend zur inneren Hauptentwässerungsrille mit dem Winkel α₅ und β₅ endend nummeriert sind, wobei α₁ zwischen 30° und 23°, vorzugsweise etwa 25° und α₂ zwischen 22° und 18°, vorzugsweise etwa 20°, wobei α₃ zwischen 17° und 13°, vorzugsweise etwa 15°, wobei α₄ zwischen 8° und 12°, vorzugsweise etwa 10°, wobei α₅ zwischen 3° und 7°, vorzugsweise etwa 5° beträgt und wobei β_{1,2,3,4,5} zwischen 1° und 5°, vorzugsweise etwa 3° betragen.

5. Asymmetrisches Laufflächenprofil nach einem oder mehreren der vorangehenden Ansprüche, **dadurch gekennzeichnet, dass** die Hauptentwässerungsrillen 2, 3, 4, 5, 12 symmetrisch in Bezug auf den Zenit 9 angeordnet sind.

6. Asymmetrisches Laufflächenprofil nach einem der Ansprüche 1 - 4, **dadurch gekennzeichnet, dass** die Hauptentwässerungsrillen 2, 3, 4 asymmetrisch in Bezug auf den Zenit 9 angeordnet sind.

7. Fahrzeugluftreifen, welcher ein asymmetrisches Laufstreifenprofil 1 nach einem oder mehreren der Ansprüche 1 bis 6 aufweist.

## Claims

1. Asymmetrical tread profile (1) of a vehicle tyre - in particular a pneumatic car tyre - with at least two main drainage grooves (2, 3, 4), which run around over the circumference of the vehicle tyre in a circumferential direction and delimit profile elements from one another in the circumferential direction, wherein - as viewed in the tyre cross section - each main drainage groove (2, 3, 4) is bounded axially outwardly by two opposing groove flanks (5_{1,2,3}, 6_{1,2,3}) and is bounded axially inwardly by a groove base (7) enclosed by the two groove flanks (5_{1,2,3}, 6_{1,2,3}), wherein the outer groove flanks (5_{1,2,3}) , facing outside the vehicle in a state of the vehicle tyre in which it is fitted on the vehicle, form an angle α_{1,2,3} with the radial direction (rR) running in the section of the groove flank (5_{1,2,3}) with the tread profile surface (8) and wherein the inner groove flanks (6_{1,2,3}) , facing inside the vehicle in a state of the vehicle tyre in which it is fitted on the vehicle, form an angle β_{1,2,3} with the radial direction (rR) running in the section of the groove flank (6_{1,2,3}) with the tread profile surface (8), wherein the angles α_{1,2,3} are greater than the angles β_{1,2,3}, wherein the angles β_{1,2,3} of the inner groove flanks (6_{1,2,3}) of all the main drainage grooves (2, 3, 4) are of approximately the same size and are between 0° and 5°,
**characterized in that**
the angles α_{1,2,3} of the outer groove flanks (5_{1,2,3}) decrease in size from the outermost (2) main drainage groove, which is arranged on the outer side of the tread profile (1), to the innermost main drainage groove (4), which is arranged on the inner side of the tread profile (1).

2. Asymmetrical tread profile according to Claim 1, **characterized in that** it has three main drainage grooves 2, 3, 4, wherein the angles α₁ and β₁ are assigned to the outermost main drainage groove 2, the angles α₂ and β₂ are assigned to the middle main drainage groove 3 arranged in the tread and the angles α₃ and β₃ are assigned to the innermost main drainage groove 4, with α₁ being between 15° and 25°, preferably approximately 20°, and α₂ being between 8° and 12°, preferably approximately 10°, and with α₃ being between 3° and 7°, preferably approximately 5°, and with β_{1,2,3} being between 1° and 5°, preferably approximately 3°.

3. Asymmetrical tread profile according to Claim 1, **characterized in that** it has four main drainage grooves 2, 3, 4, 12, wherein the angles α₁₋₄ and β₁₋₄ are numbered beginning from the outermost main drainage groove 2 with the angle α₁ and β₁ to ending with the inner main drainage groove 12 with the angle α₄ and β₄, with α₁ being between 25° and 18°, preferably approximately 20°, and α₂ being between 17° and 13°, preferably approximately 15°, with α₃ being between 12° and 8°, preferably approximately 10°, with α₄ being between 3° and 7°, preferably approximately 5°, and with β_{1,2,3,4} being between 1° and 5°, preferably approximately 3°.

4. Asymmetrical tread profile according to Claim 1, **characterized in that** it has five main drainage grooves, wherein the angles α₁₋₅ and β₁₋₅ are numbered beginning from the outer main drainage groove with the angle α₁ and β₁ to ending with the inner main drainage groove with the angle α₅ and β₅, with α₁ being between 30° and 23°, preferably approximately 25°, and α₂ being between 22° and 18°, preferably approximately 20°, with α₃ being between 17° and 13°, preferably approximately 15°, with α₄ being between 8° and 12°, preferably approximately 10°, with α₅ being between 3° and 7°, preferably approximately 5°, and with β_{1,2,3,4,5} being between 1° and 5°, preferably approximately 3°.

5. Asymmetrical tread profile according to one or more of the preceding claims, **characterized in that** the main drainage grooves 2, 3, 4, 5, 12 are arranged symmetrically with respect to the zenith 9.

6. Asymmetrical tread profile according to one of Claims 1-4, **characterized in that** the main drainage grooves 2, 3, 4 are arranged asymmetrically with respect to the zenith 9.

7. Pneumatic vehicle tyre, which has an asymmetrical tread profile 1 according to one or more of Claims 1 to 6.

## Revendications

1. Profil (1) asymétrique de surface de roulement d'un bandage de roue de véhicule, en particulier d'un bandage pneumatique de voiture automobile, présentant au moins deux rainures principales (2, 3, 4) d'évacuation d'eau qui entourent la périphérie du bandage de roue du véhicule dans la direction périphérique et qui délimitent les uns par rapport aux autres des éléments profilés dans la direction périphérique, chaque rainure principale (2, 3, 4) étant délimitée dans la section transversale du bandage de roue axialement vers l'extérieur par deux flancs mutuellement opposés (5_{1,2,3}, 6_{1,2,3}) de rainure et radialement vers l'intérieur par un fond (7) de rainure bordé par les deux flancs (5_{1,2,3}, 6_{1,2,3}) de rainure, les flancs extérieurs (5_{1,2,3}) de rainure tournés vers l'extérieur du véhicule lorsque le bandage de roue est monté sur le véhicule formant un angle α_{1,2,3} avec la direction radiale (rR) qui s'étend en coupe du flanc (5_{1,2,3}) de rainure avec la surface (8) du profil de surface de roulement, et les flancs intérieurs (6_{1,2,3}) orientés vers l'intérieur du véhicule lorsque le bandage de roue est monté sur le véhicule un angle β_{1,2,3} avec la direction radiale (rR) qui s'étend en coupe du flanc (61,2,3) de rainure avec la surface (8) du profil de surface de roulement,
les angles α_{1,2,3} étant supérieur aux angles β_{1,2,3}, et les angles β_{1,2,3} des flancs intérieurs (6_{1,2,3}) de rainure de toutes les rainures principales (2, 3, 4) ayant sensiblement la même valeur et étant compris entre 0° et 5°,
**caractérisé en ce que**
les angles α_{1,2,3} des flancs extérieurs (5_{1,2,3}) de la rainure principale d'évacuation d'eau extérieurs (2) disposés sur le côté extérieur du profil (1) de surface de roulement diminuant en direction de la rainure principale intérieure (4) d'évacuation d'eau disposée sur le côté intérieur du profil (1) de surface de roulement.

2. Profil asymétrique de surface de roulement selon la revendication 1, **caractérisé en ce que** ce dernier présente trois rainures principales (2, 3, 4) d'évacuation d'eau, les angles α₁ et β₁ étant associés à la rainure principale extérieure (2) d'évacuation d'eau, les angles α₂ et β₂ à la rainure principale (3) d'évacuation d'eau disposée au milieu de la bande de roulement et les angles α₃ et β₃ à la rainure principale intérieure (4) d'évacuation d'eau, α₁ étant compris entre 15° et 25° et valant de préférence environ 20°, α₂ étant compris entre 8° et 12° et valant de préférence environ 10°, α₃ étant compris entre 3° et 7° et valant de préférence environ 5° et β_{1,2,3} étant compris entre 1° et 5° et valant de préférence environ 3°.

3. Profil asymétrique de surface de roulement selon la revendication 1, **caractérisé en ce que** ce dernier présente quatre rainures principales (2, 3, 4, 12) d'évacuation d'eau, les angles α₁₋₄ et β₁₋₄ allant de la rainure principale extérieure (2) d'évacuation d'eau avec les angles α₁ et β₁ en direction de la rainure principale intérieure (12) d'évacuation d'eau avec les angles numérotés α₄ et β₄, α₁ étant compris entre 25° et 18° et valant de préférence environ 20°, α₂ étant compris entre 17° et 13° et valant de préférence environ 15°, α₃ étant compris entre 12° et 8° et valant de préférence environ 10°, α₄ étant compris entre 3° et 7° et valant de préférence environ 5° et β_{1,2,3,4} étant compris entre 1° et 5° et valant de préférence environ 3°.

4. Profil asymétrique de surface de roulement selon la revendication 1, **caractérisé en ce que** ce dernier présente cinq rainures principales d'évacuation d'eau, les angles α₁₋₅ et β₁₋₅ allant de la rainure principale extérieure d'évacuation d'eau avec les angles α₁ et β₁ en direction de la rainure principale intérieure d'évacuation d'eau avec les angles numérotés α₅ et β₅, α₁ étant compris entre 30° et 23° et valant de préférence environ 25°, α₂ étant compris entre 22° et 18° et valant de préférence environ 20°, α₃ étant compris entre 17° et 13° et valant de préférence environ 15°, α₄ étant compris entre 8° et 12° et valant de préférence environ 10° et α₅ étant compris entre 3° et 7° et valant de préférence environ 5°, β_{1,2,3,4,5} étant compris entre 1° et 5° et valant de préférence environ 3°.

5. Profil asymétrique de surface de roulement selon l'une ou plusieurs des revendications précédentes, **caractérisé en ce que** les rainures principales (2, 3, 4, 5, 12) d'évacuation d'eau sont disposées symétriquement par rapport au zénith (9).

6. Profil asymétrique de surface de roulement selon l'une des revendications 1 à 4, **caractérisé en ce que** les rainures principales (2, 3, 4) d'évacuation d'eau sont disposées asymétriquement par rapport au zénith (9).

7. Bandage pneumatique pour roue de véhicule qui présente un profil asymétrique (1) de bande de roulement selon l'une ou plusieurs des revendications 1 à 6.
